# EUROPEAN PATENT APPLICATION

(11) **EP 2 341 262 A2**
(43) Date of publication of application: **06.07.2011**
(21) Application number: 10197224.8
(22) Date of filing: 29.12.2010
(51) Int. Cl.: F16F 9/02

(54) **Clutch mechanism preventing rotation of the shaft and pipe in gas springs**

(30) Priority: 31.12.2009 TR 200910119
(71) Applicant: Destek otomotiv yan sanayi ve ticaret Anonim sirketi, 16159 Bursa (TR)
(72) Inventor: Yigit, Süreyya, 16159 Bursa (TR)
(74) Representative: Iskender, Ibrahim

(57) **Abstract**

The invention relates to mechanisms preventing the rotational motion of a gas spring (2), which is centered inside an external pipe (5), and which has the potential of upwards and downwards motion (11,12), thereby, in order to cancel the rotational motion of the gas spring (2), the mechanism comprises: a guide matrix (3), which is fixed on said gas spring (2) external surface (2.1) by close fit or by being adhered between said external pipe (5) and gas spring (2), and the outer diameter edges of which has polygonal geometry; a female guide matrix (4), which has the same geometric form as the guide matrix (3) having said polygonal geometry, and which are centered together with each other, and a connection component (6) providing fixation of the female guide matrix (4) on the external pipe (5).

## Description

### The Related Art

The invention relates to a clutch mechanism, which prevents rotation of the shaft and pipe with regards to each other in the products also called as gas spring, Lift, Hydrolift, or Blocklift, and which only permits axial motion.

The present invention relates to mechanisms preventing the rotational motion of the gas spring, which is centered inside an external pipe, and which has the potential of upwards and downwards motion, and in order to cancel the rotational motion of the gas spring, between said external pipe and gas spring, it comprises: a guide matrix, which is fixed on external surface of said gas spring by close fit or by being adhered, and the outer diameter edges of which has polygonal geometry, a female guide matrix, which has the same geometric form with the guide matrix having said polygonal geometry, and which are centered together with each other, and a connection component providing fixation of said female guide matrix on the external pipe.

### Background of the Invention

Gas springs, having a wide area of usage, are auxiliary components used in lifting and lowering operations in barber and dental chairs, patient beds and various industrial operation tables and in various other fields like these.

Besides providing lifting of the load found on them with a certain force, gas springs also have the potential of axial motion. For example, a gas spring positioned at the lower region of a chair both has the force for lifting the sitting surface of the chair and also provides axial motion of the chair. However, in some special cases, rotation of the chair is not desired. In the prior art, there are some technical applications for preventing rotation of the chair.

Some applications are encountered in the patent research made about the structures which prevent rotation of the shaft and pipe in gas springs. Patent application with no. US5531413 registered in the name of SUSPA COMPART GmbH AG is found among these applications. In this application; a chair having an adjustable structure, and a structure having pneumatic or hydropneumatic structure guided in the direction of a common axis which is supported by a radial tube, is disclosed. A mechanism is described, which comprises recessions particularly formed at the external pipe inner surface, and in which the axial motion is prevented via an inner shaft having network or protrusions having geometric shape with these recessions.

The technique used in the prior art; occupies much space due to the design of the mechanism which would eliminate the rotation effect. Moreover, besides having low durability, it also has mounting and labour difficulties.

### Description of the Invention

The purpose of the invention is to have a structure, which provides a novel expansion and technical feature in this field with regards to the structures used in the prior art.

A purpose of the invention is to have the property of being mounted in an easier manner than the structures used in the prior art. As a result of this, purpose is to contribute to the art from the point of costs and production processes which do not have labour difficulty.

A purpose of the invention is to occupy less space with the design of the mechanism, which would eliminate the rotation effect. Therefore, the purpose is to obtain a product, which serves the same purpose with less material.

Another purpose of the invention is to have a structure, which provides more durability than the structure used in the prior art via the less notched structure formed on the clutch component.

In order to achieve the above said purposes, the invention relates to mechanisms preventing the rotational motion of the gas spring, which is centered inside an external pipe, and which has the potential of upwards and downwards motion, and it is characterized in that; in order to cancel the rotational motion of the gas spring, between said external pipe and gas spring, it comprises: a guide matrix, which is fixed on external surface of the gas spring by close fit or by being adhered, and the outer diameter edges of which has polygonal geometry, a female guide matrix, which has the same geometric form with the guide matrix having said polygonal geometry, and which are centered together with each other, and a connection component providing fixation of said female guide matrix on the external pipe.

### Figures for Better Understanding of the Invention

Figure-1; is the two dimensional sectional top view of the gas spring, which is the subject of the invention, while the fixation flange, guide matrix, and fixation cap screw are in mounted position.
Figure-2; is the two dimensional sectional top view of the guide matrix having different geometric form while fixation flange and fixation cap screw are in mounted position on gas spring.
Figure-3; is the two dimensional sectional side view of the gas spring, which is the subject of the invention, while the fixation flange, guide matrix and fixation cap screw are in mounted position.
Figure-4; is the close plan sectional view together with the fixation flange, which is preferably added to the mechanism for providing connection of the guide matrix with the gas spring. It shows the externally fixed shape of the female matrix.
Figure-5; is the close plan sectional view from a different region together with the fixation flange, which is preferably added to the mechanism for providing connection of the guide matrix with the gas spring.
Figure-6; is the sectional side view of the fixation flange, which is added to the mechanism for providing connection of the guide matrix with the gas spring.
Figure-7; is the two dimensional sectional close plan view of the matrix protrusion having cornered shape formed on the guide matrix while the female guide matrix is fixed on the guide matrix via a screw cap.

### Parts Numbers

- 1.: Control component
- 2.: Gas spring, Lift, Blocklift, Hydrolift
- 2.1: External surface
- 3.: Guide matrix
- 4.: Female guide matrix
- 4.1: Recession
- 5.: External pipe
- 6.: Connection component (pin, rivet, screw, close fit)

- 7.: Guide adhesive
- 8.: Pipe adhesive
- 9.: Radiused or chamfered surfaces
- 10.: Fixation flange
- 11.: Upwards motion of the lift
- 12.: Downwards motion of the lift
- 13.: Gas spring shaft
- 14.: Shaft fixation point
- 15.: Fixation component
- 16.: Matrix protrusion

### Detailed Description of the Invention

In this detailed description, the preferred embodiments of the gas spring (2), which is the subject of the invention, will only be disclosed for better understanding of the subject, and will not form any limiting effect.

The invention relates to mechanisms preventing the rotational motion of the gas spring (2), which is centered inside an external pipe (5) controlled by a control component (1), and which has the potential of upwards and downwards motion (11,12), and it is characterized in that; in order to cancel the rotational motion of the gas spring (2), it comprises: a guide matrix (3), which is fixed on said gas spring (2) external surface (2.1) by close fit or by being adhered between said external pipe (5) and gas spring (2), and the outer diameter edges of which has polygonal geometry, a female guide matrix (4), which has the same geometric form with the guide matrix (3) having said polygonal geometry, and which are centered together with each other, and a connection component (6) providing fixation of said female guide matrix (4) on the external pipe (5).

The invention comprises radiused surfaces, which are formed at the edges of the polygonal structures preventing the motion of the guide matrix (3) and female guide matrix which are centered with each other, and adhesives (7.8) for providing fixation of guide matrix (3) at external surface (2.1) of the gas spring (2) and that of pipe (5) at the external surface of the female guide matrix (4).

As an alternative structure, in order to cancel the rotational motion of the gas spring (2), the invention comprises: a guide matrix (3), which is fixed on said gas spring (2) external surface (2.1) by close fit between said external pipe (5) and gas spring (2), and on which at least one protrusion (16) is formed, a female guide matrix (4), which has a recession (4.1) in that said guide matrix (3) protrusion (16) is positioned, and a fixation flange (10) which is positioned between the guide matrix (3) and gas spring (2).

The fixation flange (10) comprises a fixation component (15) between the guide matrix (3) and the gas spring (2). Moreover said matrix protrusion (16) and matrix recession (4.1) have different geometric forms.

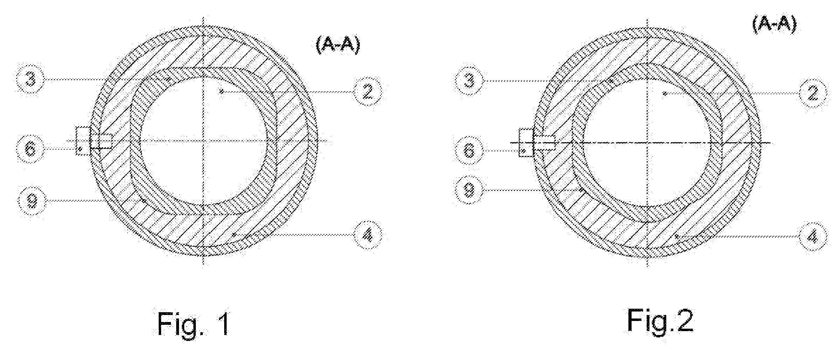

The way of operation of the mechanism is as follows: guide matrix (3) is placed on the gas spring (2) pipe (5). The structure of the guide matrix (3) is preferably produced by machining, wire erosion, sintering or hot-cold drawing. This guide matrix (3) is fixed on the pipe (5) by using close fit and/or additional adhesive. The external surface of the guide matrix (3) has a surface shape formed of tetragonal, pentagonal, hexagonal, or oval etc. smooth polygonal (see Figure 1 and Figure 2). The corners of the polygonal found at this surface has a radiused or chamfered surface. In this way, durability of the female matrix (4) increases.

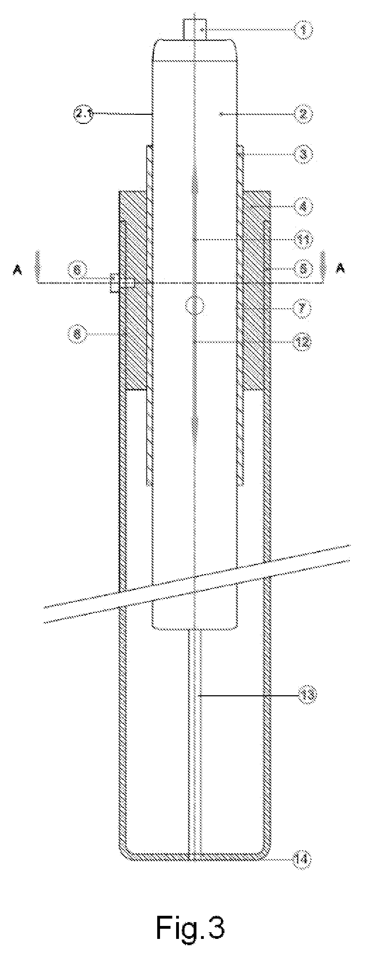

The shaft (13) of the gas spring (2) is vertically fixed at the external pipe (5) at the contact point (14). The female matrix (4) external surface is made in a way that it would fit the pipe (5) and it is fixed at the pipe (5) via the connection component (6). Use of more than one connection component is possible according to demand. The internal surface profile of the female matrix (4) has a geometric form compatible with the external surface of the guide matrix (3). The gas spring (2) and guide matrix (3) are centered by entering in the female matrix (4). The angled structure of the matrices (3,4) moves the gas spring (3) and the guide matrix (3) upwards and downwards (11,12) (see Figure 3). Gas spring (2) can not make rotating motion because of this structure. And this is the desired way of operation.

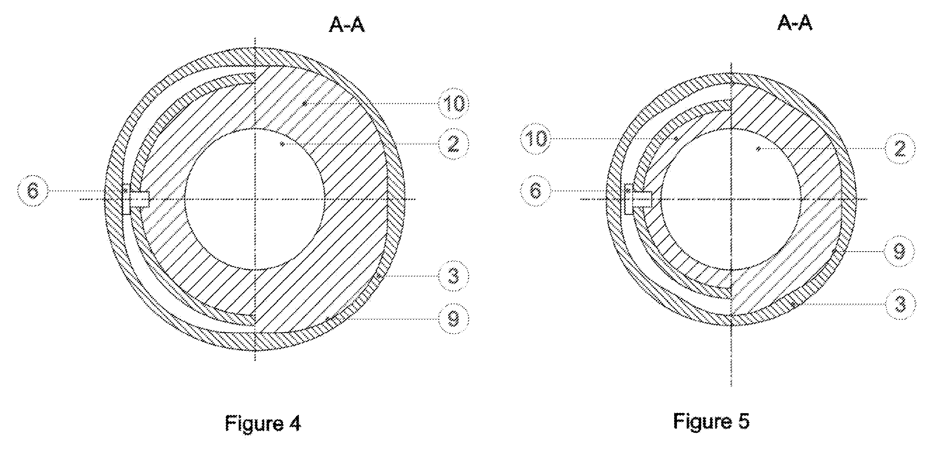

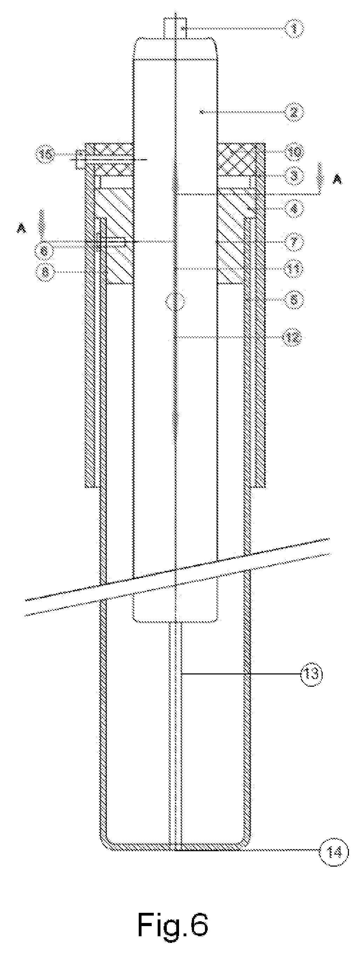

Similarly, as it would be seen in Figures 4,5, and 6, the places of the male and female matrices (3,4) can be changed. In this way, a wider field of application is provided. The way of operation is the same. The only difference is the coupling of a fixation flange (10) to the mechanism in order to be able to fix the guide matrix (3) at the gas spring (2). The fixation flange (10) is included in the mechanism via the fixation component (15).

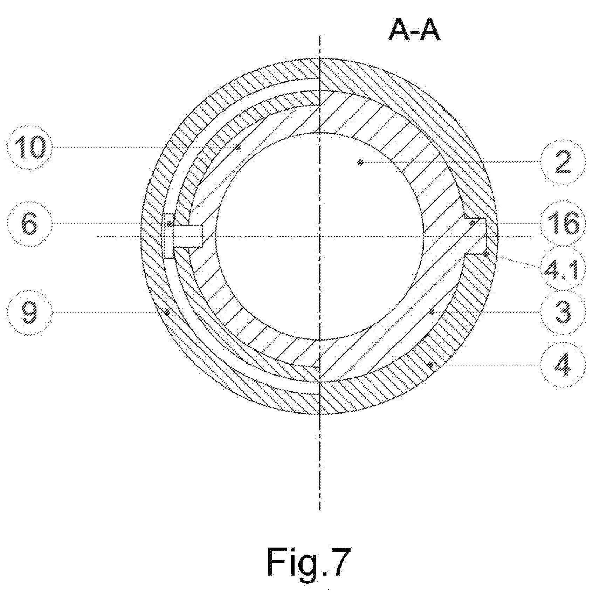

The shapes of the externally connected matrices (3,4) can also be as shown in Figure 7 (A-A). The shape of the recession and protrusion (4.1, 16) found here may have tetragon, rectangle, and triangle etc. forms. The essential idea is to have male-female format, which would prevent rotation. The number of these protrusions (16) can be more than one. They have to be placed circularly in equal angles in order to balance the loads.

Guide matrix (3) can be made of metal, sinter, aluminium, bronze, plastic or alloy material and produced by extrusion or other process methods by being cut via wire erosion. The feature of the matrix is: to have an internal wall, which can be mounted at the gas spring (2) external surface (2.1) via close fit or by using an adhesive or by using both. For ease of mounting, it can be made in the form having corrugated structure in its internal wall. The external wall of the matrix (3) is made in the form of tetragonal, pentagonal, hexagonal, oval etc. form. This form prevents rotation. However, it permits vertical linear motion. The contribution of the radiused surface (9) to the matrix (3) is to increase the durability of the female matrix (4). Preferably, use of chamfer is also possible instead of radiused surfaces.

The matrix (3) is found between the gas spring (2) and the female guide matrix (4) (see Figure-3). However, in some applications, it externally clutches the system by addition of fixation flange (10). The way of operation is the same in this case.

Female guide matrix (4) can be made of metal, sinter, aluminium, bronze, plastic or alloy material and produced by extrusion or other process methods by being cut via wire erosion.

Female guide matrix (4) can be made of metal, sinter, aluminium, bronze, plastic or alloy material and produced by extrusion or other process methods by being cut via wire erosion. This form has the same form with the guide matrix (3) and they operate coaxially in a compatible manner. The feature of the matrix is: to have an external wall, which can be mounted at the external pipe (5) via close fit or by using an adhesive or by using both. For ease of mounting, it can be made in the form having corrugated structure in its internal wall. As a different mounting method, the connection component (6) can be mounted via rivet, pin or bolt. This bolt can be circumferentially more than one.

The internal wall of the matrix (4) is made in tetragonal, pentagonal, hexagonal, oval etc. form. This form prevents rotation. However, it axially permits vertical linear motion. The contribution of the radiused surfaces (9) on the matrix (4) is increasing the durability of the matrix. Chamfer can also be used instead of radiused surfaces (9). The herein referred radius co-operates with the corner radius of the guide matrix (3). The matrix (4) is between the guide matrix (3) and the external pipe (5) (Figure 3). However, it can be fixed at the pipe (5) via close fit or fixation component (15) or pin. The way of operation is the same even in this case.

The protection area of this application has been specified under claims and cannot be limited to the descriptions only given as sampling above. It is obvious that a person skilled in the related art can apply the innovation disclosed by this invention into similar purposed other areas by means of changing the parts in form and using similar structures. Therefore, it is also clear that such embodiments lack of innovation criteria and especially the criteria of exceeding the known status of the art.

## Claims

1. The invention relates to mechanisms preventing the rotational motion of the gas spring (2), which is centered inside an external pipe (5), and which has the potential of upwards and downwards motion (11,12), and it is **characterized in that**; in order to cancel the rotational motion of the gas spring (2), it comprises: a **guide matrix (3),** which is fixed on external surface (2.1) of said gas spring (2) by close fit or by being adhered between said external pipe (5) and gas spring (2), and the outer diameter edges of which has polygonal geometry, a **female guide matrix (4),** which has the same geometric form with the guide matrix (3) having said polygonal geometry, and which are centered together with each other, and a **connection component (6)** providing fixation of said female guide matrix (4) on the external pipe (5).

2. Mechanism according to Claim 1, and it is **characterized in that**; it comprises chamfered and/or radiused surfaces formed at the polygonal structure corners which prevent the rotational motion of the guide matrix (3) and the female guide matrix centered with each other.

3. A mechanism according to Claim 1 and 2, and it is **characterized in that**; it comprises adhesives (7, 8) used to provide fixation of the pipe (5) at the external surface of the guide matrix (3) and female guide matrix (4) and fixation of these at external surface (2.1) of said gas spring (2).

4. The invention relates to mechanisms preventing the rotational motion of the gas spring (2), which is centered inside an external pipe (5), and which has the potential of upwards and downwards motion (11,12), and it is **characterized in that**; in order to cancel the rotational motion of the gas spring (2), it comprises: **a guide matrix (3)**, which is fixed on external surface (2.1) of said gas spring (2) by close fit between said external pipe (5) and gas spring (2), and on which at least one protrusion (16) is formed, **a female guide matrix (4),** which has a recession (4.1) **in that** said guide matrix (3) protrusion (16) is positioned, and **a fixation flange** (10) which is positioned between said guide matrix (3) and gas spring (2).

5. A mechanism according to Claim 5, and it is **characterized in that**; said fixation flange (10) is fixed between guide matrix (3) and the gas spring (2) via a fixation component (15).

6. A mechanism according to Claims 5 and 6, and it is **characterized in that**; said matrix protrusion (16) and the matrix recession (4.1) have different geometric forms.
